# EUROPÄISCHE PATENTANMELDUNG

(11) **EP 2 020 539 A1**
(43) Veröffentlichungstag der Anmeldung: **04.02.2009**
(21) Anmeldenummer: 08161560.1
(22) Anmeldetag: 31.07.2008
(51) Int. Cl.: F16J 15/00, F16J 15/34

(54) **Dynamische Dichtungsanordnung für ein Getriebe**

(30) Priorität: 02.08.2007 DE 102007036609
(71) Anmelder: Lohmann & Stolterfoht GmbH, 58455 Witten (DE)
(72) Erfinder: Grimm, Raimund, 58640 Iserlohn (DE); Meise, Andreas, 44795 Bochum (DE); Skonetzki, Heike, 44799 Bochum (DE)
(74) Vertreter: Kietzmann, Lutz

(57) **Zusammenfassung**

Dynamische Dichtungsanordnung zur radialen Abdichtung eines ruhenden Getriebeteils (4) gegenüber einem drehbaren Getriebeteil (5), wobei eine ersten Dichtungspaarung (1), die koaxial zu einer zweiten Dichtungspaarung (2) relativ größeren Durchmessers angeordnet ist, wobei jede Dichtungspaarung (1; 2) aus gegeneinander drückenden dynamischen Axialdichtringen (1a, 1b; 2a, 2b) besteht, von denen je ein Axialdichtring (1a, 2a) dem ruhenden Getriebeteil (4) und der andere Axialdichtring (1b, 2b) dem drehbaren Getriebeteil (5) zugeordnet ist, und dass ein dazwischen gebildeter ringförmiger Freiraum (3) zumindest teilweise mit Ö1 befüllt ist.

## Beschreibung

Die vorliegende Erfindung betrifft eine dynamische Dichtungsanordnung zur radialen Abdichtung eines ruhenden Getriebeteils gegenüber einem drehbaren Getriebeteil mit einer ersten Dichtungspaarung, die koaxial zu einer zweiten Dichtungspaarung relativ größeren Durchmessers angeordnet ist.

Das Einsatzgebiet der vorliegenden Erfindung erstreckt sich vornehmlich auf den Getriebebau. In verschmutzten Umgebungen ist es erforderlich, die Abtriebsseite von Getrieben zu schützen, um ein Eindringen von Schmutz und Feuchtigkeit über den Bereich zwischen dem drehbaren Getriebeteil zum ruhenden Getriebeteil zu verhindern. Dies ist insbesondere bei solchen Getrieben erforderlich, die unter Wasser zum Einsatz kommen oder innerhalb aggressiver Medien, beispielsweise Beton, betrieben werden.

Aus dem allgemeinen Stand der Technik sind derartige dynamische Dichtungsanordnungen bekannt. Sogenannte Laufwerksdichtungen oder Gleitringdichtungen werden verwendet, um das Eindringen von Schmutz und Feuchtigkeit in das innere des Getriebes zu verhindern. Um eine möglichst hohe Standzeit zu erzielen, werden insbesondere berührungsfreie Wellendichtungen zum Einsatz gebracht, wie beispielsweise eine Labyrinthdichtung. Die Dichtwirkung beruht auf der Verlängerung des Dichtweges durch eine wechselweise Anordnung von Ringen auf einer abtriebsseitigen Welle eines Getriebes gegenüber dem ruhenden Getriebeteile, meist dem Getriebegehäuse. Aufgrund des hohen Strömungswiderstandes in dem langen Spalt kann nur eine geringe tolerierbare Ölmenge aus dem Inneren des Getriebes durch die Labyrinthdichtung austreten. In Gegenrichtung schützt das austretende Öl das Getriebe vor eindringenden Schmutzpartikeln. Eine absolute Dichtheit ist mit dieser berührungsfreien Konstruktion nicht möglich.

Es ist die Aufgabe der vorliegenden Erfindung, eine dynamische Dichtungsanordnung zu schaffen, welche sich durch eine hohe Standzeit sowie durch eine hohe Dichtwirkung vor eindringenden Schmutzpartikeln auszeichnet.

Die Aufgabe wird ausgehend von einer dynamischen Dichtungsanordnung gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass eine erste Dichtungspaarung vorgesehen ist, die koaxial zu einer zweiten Dichtungspaarung relativ größeren Durchmessers angeordnet ist, wobei jede Dichtungspaarung aus gegeneinander drückenden dynamischen Axialdichtringen besteht, von denen je ein Axialdichtring dem ruhenden und der andere Axialdichtring dem drehbaren Getriebeteil zugeordnet ist, und dass ein dazwischengebildeter ringförmiger Freiraum mit Öl befüllt ist.

Der Vorteil der erfindungsgemäßen dynamischen Dichtungsanordnung liegt insbesondere darin, dass durch die koaxiale Anordnung der beiden Dichtungspaarungen in Axialrichtung wenig Bauraum benötigt wird. Das sich im Freiraum befindliche Öl fängt Schmutzpartikel ab, so dass hierdurch die erste Dichtungspaarung relativ kleineren Durchmessers geschützt wird.

Gemäß einer die Erfindung verbessernden Maßnahme wird vorgeschlagen, den ölbefüllten Freiraum an ein Druckausgleichssystem anzuschließen. Als Druckausgleichssystem kann dabei beispielsweise der Druckausgleich der das Getriebe enthaltenen Arbeitsmaschine genutzt werden. Der Druckausgleich verhindert, dass eine Druckdifferenz zwischen der Umwelt, dem ölbefüllten Freiraum sowie dem Getriebeinnenraum entsteht. Hierdurch wird beispielsweise vermieden, dass Öl aus dem Freiraum, welches durch Temperaturanstieg im Betrieb aufgrund eines hierdurch entstehenden Überdrucks nach außen dringen könnte.

Weiterhin wird vorgeschlagen, dass der ölbefüllte Freiraum über einen Kanal, der vorzugsweise im drehenden Anschlussteil ausgebildet ist, von außen her zugänglich ist. Über diesen Kanal können beispielsweise Ölproben aus dem Freiraum gezogen werden, um festzustellen, ob ein Austausch der Ölbefüllung oder ein Austausch einer Dichtungspaarung erforderlich ist. Vorteilhafterweise ist durch diese Maßnahme eine Prüfung des Öls ohne Demontage des Getriebes möglich. Der Kanal kann gleichzeitig auch als Ölablass dienen.

Vorteilhafterweise sollte der Innendurchmesser der zweiten Dichtungspaarung größer als der Hülldurchmesser des ruhenden Getriebeteils sein. Durch diese geometrischen Verhältnisse ist eine Demontage der Dichtung möglich, ohne dass das Getriebe zerlegt werden muss.

Gemäß einer weiteren, die Erfindung verbessernden Maßnahme wird vorgeschlagen, dass zumindest die seitens des ruhenden oder drehenden Getriebeteils angeordneten Axialdichtringe beider Dichtungspaarungen über je ein lösbar mit dem ruhenden bzw. drehenden Getriebeteil verbundenen Aufnahmering befestigt sind. Dies bedeutet, dass zumindest die jeweils eine Seite der Dichtungspaarungen mit einer lösbaren Aufnahme am Getriebe befestigt wird. Dies bietet den Vorteil, dass bei Verschleiß des im Aufnahmering ausgebildeten Dichtungssitzes nicht ein Kernbauteil des Getriebes ausgetauscht werden muss, sondern lediglich der betroffene Aufnahmering. Solche Aufnahmeringe sind zumindest seitens des ruhenden oder drehenden Getriebeteils anzuordnen, können jedoch auch seitens beider Getriebeteile vorgesehen werden. Alternativ hierzu ist es auch denkbar, die Dichtungspaarungen gänzlich ohne zwischengeschaltete lösbare Aufnahmeringe, also direkt in das jeweilige Getriebeteil einzusetzen.

Die in Verbindung mit der erfindungsgemäßen Lösung zum Einsatz kommenden Axialdichtringe bestehen vorzugsweise aus einem Elastomerdichtring zur Aufbringung einer Druckkraft für einen axial benachbarten Metalldichtring mit stirnseitiger Dichtfläche. Über die stirnseitige Dichtfläche kommen die beiden Axialdichtringe einer Dichtungspaarung gegeneinander zwecks dynamischer Abdichtung zur Anlage. Die Elastomerdichtringe liefern durch Einbau unter Vorspannung die hierfür erforderliche Druckkraft.

Weitere, die Erfindung verbessernde Maßnahmen werden nachstehende gemeinsam mit der Beschreibung bevorzugter Ausführungsbeispiele der Erfindung näher dargestellt. Es zeigt:
- Fig.1: einen Teilquerschnitt durch eine dynamische Dichtungsanordnung gemäß einer ersten Ausführungsform, und
- Fig.2: einen Teilquerschnitt durch eine dynamische Dichtungsanordnung gemäß einer zweiten Ausführungsform.

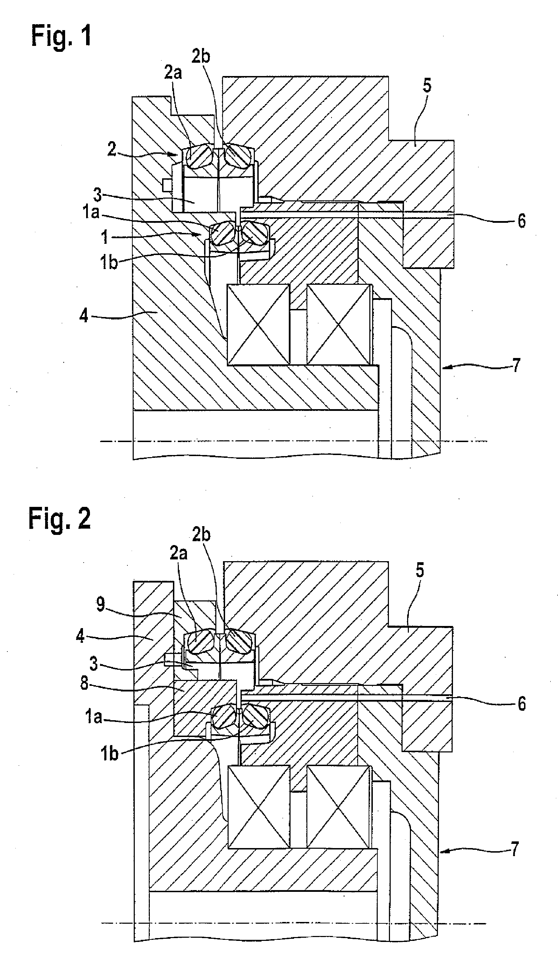

Gemäß Fig.1 besteht die dynamische Dichtungsanordnung im Wesentlichen aus einer ersten Dichtungspaarung 1, die koaxial zu einer zweiten Dichtungspaarung 2 relativ größeren Durchmessers angeordnet ist. Zwischen beiden Dichtungspaarungen 1 und 2 ist ein ringförmiger Freiraum 3 ausgebildet, welcher mit Öl befüllt ist.

Die erste Dichtungspaarung 1 besteht aus zwei axial gegeneinander drückenden dynamischen Axialdichtringen 1a und 1b; genauso besteht auch die zweite Dichtungspaarung 2 aus zwei gegeneinander drückenden dynamischen Axialdichtringen 2a und 2b. Hiervon ist je ein Axialdichtring 1a bzw. 1b an einem ruhenden Getriebeteil 4 angeordnet, wogegen die Axialdichtringe 1b und 2b auf der anderen Seite einem drehbaren Getriebeteil 5 zugeordnet sind. Das drehbare Getriebeteil 5 ist über eine Wälzlagerung 7 drehbar am ruhenden Getriebeteil 4 gelagert.

Der ölbefüllte Freiraum 3 ist über einen drehenden Anschlussteil 5 ausgebildeten Kanal von außen her zugänglich, um die Ölbefüllung vorzunehmen, Altöl abzulassen oder Proben zur Prüfung der Ölgüte zu entnehmen.

Gemäß Fig.2 ist seitens des ruhenden Getriebeteils 4 für den hieran angeordneten Axialdichtring 1a ein erster Aufnahmering 8 vorgesehen, in welchem der Axialdichtring 1a eingesetzt ist. Der Aufnahmering 8 wiederum ist lösbar über eine Verschraubung am ruhenden Getriebeteil 4 angebracht. In analoger Weise ist der andere Axialdichtring 2a über einen diesem zugeordnetem zweiten Aufnahmering 9 lösbar am ruhenden Getriebeteil 4 angebracht.

Die Erfindung ist nicht beschränkt auf die beiden vorstehend beschriebenen bevorzugten Ausführungsbeispiele. Es sind vielmehr auch Abwandlungen hiervon denkbar, welche vom Schutzbereich der nachfolgenden Ansprüche mit umfasst sind. So ist es beispielsweise auch möglich, Aufnahmeringe für Axialdichtringe auch seitlich des drehenden Getriebeteils vorzusehen oder beidseitig.

### Bezugszeichenliste

- **1**: Erstdichtungspaar
- **2**: Zweitdichtungspaarung
- **3**: Freiraum
- **4**: ruhendes Getriebeteil
- **5**: drehbares Getriebeteil
- **6**: Kanal
- **7**: Wälzlagerung
- **8**: erster Aufnahmering
- **9**: zweiter Aufnahmering

## Patentansprüche

1. Dynamische Dichtungsanordnung zur radialen Abdichtung eines ruhenden Getriebeteils (4) gegenüber einem drehbaren Getriebeteil (5),
**gekennzeichnet durch** eine ersten Dichtungspaarung (1), die koaxial zu einer zweiten Dichtungspaarung (2) relativ größeren Durchmessers angeordnet ist, wobei jede Dichtungspaarung (1; 2) aus gegeneinander drückenden dynamischen Axialdichtringen (1a, 1b; 2a, 2b) besteht, von denen je ein Axialdichtring (1a, 2a) dem ruhenden Getriebeteil (4) und der andere Axialdichtring (1b, 2b) dem drehbaren Getriebeteil (5) zugeordnet ist, und dass ein dazwischen gebildeter ringförmiger Freiraum (3) zumindest teilweise mit Öl befüllt ist.

2. Dynamische Dichtungsanordnung nach Anspruch 1,
**dadurch gekennzeichnet, dass** der ölbefüllte Freiraum (3) an ein Druckausgleichssystem angeschlossen ist.

3. Dynamische Dichtungsanordnung nach Anspruch 1,
**dadurch gekennzeichnet, dass** der ölbefüllte Freiraum (3) über einen Kanal (6) von außen her zugänglich ist.

4. Dynamische Dichtungsanordnung nach Anspruch 3,
**dadurch gekennzeichnet, dass** der Kanal (6) im drehenden Getriebeteil (5) ausgebildet ist.

5. Dynamische Dichtungsanordnung nach Anspruch 1,
**dadurch gekennzeichnet, dass** der Innendurchmesser der zweiten Dichtungspaarung (2) größer als der Hülldurchmesser des drehenden Getriebeteils (5) ist.

6. Dynamische Dichtungsanordnung nach Anspruch 1,
**dadurch gekennzeichnet, dass** zumindest die seitens des ruhenden oder drehenden Getriebeteils (4; 5) angeordneten Axialdichtringe (1a, 2a) beider Dichtungspaarungen (1; 2) über je ein lösbar mit dem ruhenden bzw. drehenden Getriebeteil (4; 5) verbundenen Aufnahmering (8, 9) befestigt sind.

7. Dynamische Dichtungsanordnung nach einem der vorstehenden Ansprüche, **dadurch gekennzeichnet, dass** der Axialdichtring (1a, 1b, 2a, 2b) aus einem Elastomerdichtring zur Aufbringung einer Druckkraft für einen axial benachbarten Metalldichtring mit stirnseitiger Dichtfläche besteht.

8. Dynamische Dichtungsanordnung nach einem der vorstehenden Ansprüche, **dadurch gekennzeichnet, dass** das drehbare Getriebeteil (5) als abtriebsseitige Welle eines Getriebes ausgebildet ist.
